# DEMANDE DE BREVET EUROPEEN

(11) **EP 1 288 064 A1**
(43) Date de publication de la demande: **05.03.2003**
(21) Numéro de dépôt: 01870185.4
(22) Date de dépôt: 27.08.2001
(51) Int. Cl.: B60P 1/20, B60P 1/28, B62D 21/02

(54) **Véhicule à benne basculante**

(71) Demandeur: Victoria Administration Limited, The Broadway, London NW73TB (GB)
(72) Inventeur: De Kock, Hugo, 3090 Overijse (BE)
(74) Mandataire: Van Straaten, Joop

(57) **Abrégé**

Benne basculante pour véhicules routiers ou remorques de tels véhicules . Cette benne comprend un châssis fixe(8), une benne en substance hémicylindrique (3) et un système de levage (6) caractérisée en ce que le système de levage (6) est une structure en compas (6) agissant en levier intermoteur , les extrémités libres de ce compas étant solidarisées à pivotement respectivement au châssis (8) et à la benne hémicylindrique(3), au moins un vérin (10) à simple ou double effet étant disposé entre les branches (4, 5) de ce compas (6).

## Description

L'invention concerne les bennes basculantes hémicylindriques ainsi que les véhicules ou leurs remorques dotées de telles bennes.

On appelle hémicylindriques ou « en baignoire » les bennes dont la section transversale, généralement formée d'une alternance de droites ou d'arcs et d'arêtes, s'inscrit en substance dans un demi-cercle.

On connaît notamment par DDR-60494 des camions à bennes basculantes hémicylindriques. Ce type de benne connaît un regain de popularité depuis qu'il a été associé à des châssis légers en berceaux tels que décrits dans EP-0 374 336. En effet, ces bennes permettent notamment une bonne répartition des charges voyageant en vrac.

Il se pose cependant avec les bennes munies de châssis en berceau un problème de durabilité. Les constructeurs n'ont en effet pas d'autre possibilité que de placer le système de levage de la benne à son extrémité frontale. En conséquence, la course à laquelle est astreint le système de levage est extrêmement longue, ce qui impose de faire appel à un vérin télescopique.

Outre le fait qu'il consomme une quantité de fluide hydraulique important, ce vérin est très lent et présente rapidement une usure importante.

Les dispositifs de levage des bennes basculantes de ce type sont en effet très vulnérables. Si l'assiette de la remorque n'est pas parfaite, ils subissent des effets de torsion voire de flambage importants lorsqu'ils sont en extension. Ils sont de même à la merci de sollicitations latérales (chocs, poussées dues au vent, etc.), or un châssis en berceau est plus sensible qu'un châssis classique aux problèmes de torsion. Par ailleurs, vu la lenteur de l'opération de bennage, il n'est pas rare de voir les conducteurs faire démarrer leur camion alors que la benne n'a pas encore regagné complètement sa nacelle, ce qui accroît encore les sollicitations anormales sur un mécanisme déjà sensible.

On a cherché à remédier à ces inconvénients sans pour autant accroître la tare de ce type de bennes.

L'objet de l'invention est un dispositif basculant pour véhicules routiers comprenant un châssis fixe et une benne basculante en substance hémicylindrique et un système de levage dans lequel le système de levage est une structure en compas agissant en levier intermoteur dont les extrémités libres sont solidarisées à pivotement respectivement au châssis et à la benne, au moins un vérin étant disposé entre les branches de ce compas.

L'avantage du système de levage du dispositif basculant de l'invention est qu'il devient pratiquement insensible aux sollicitations latérales extérieures : la structure du compas formée exclusivement d'éléments mécaniques rigides permet de reprendre sans effort toutes les sollicitations exercées sur le châssis ou sur la benne.

Un autre avantage est que le ou les vérins utilisés n'ont besoin que d'une faible course (de l'ordre du mètre), qu'ils consomment une quantité réduite de fluide hydraulique et qu'ils ne subissent que des contraintes axiales. Outre leur usure réduite, ces vérins sont des modèles aux caractéristiques standards, relativement économiques et, surtout, généralement disponibles de stock.

Un autre avantage est que l'opération de bennage est très rapide, et qu'il est même possible à l'opérateur de secouer la benne pour en détacher les reliquats des matériaux déversés.

Le dispositif de l'invention s'applique aussi bien à des camions à bennes qu'à des remorques ou des semi-remorques.

La structure en compas est solidarisée de préférence à la partie inférieure de la benne hémicylindrique .

Suivant un mode de réalisation préféré, le châssis fixe est à la fois allégé et renforcé par rapport à un châssis à longerons classique.

Ce châssis fixe est, suivant un exemple avantageux, constitué essentiellement de longerons et de traverses reliés entre eux par des tôles cintrées formant des assemblages en pattes d'éléphant.

De préférence, les tôles cintrées présentent des découpes permettant la soudure en surface de ces tôles aux traverses et longerons.

Il va de soi que d'autres modes d'allégement et de renforcement peuvent être appliqués, tels que l'usage de structures en treillis ou de tôles de rigidification.

L'invention a également pour objet un véhicule routier et une remorque pour véhicule routier qui comprennent un dispositif basculant comme décrit ci-dessus.

D'autres particularités ou avantages de l'invention ressortiront de la description ci-après de formes de réalisation particulières, référence étant faite aux dessins annexés, dans lesquels :
La Fig. 1 est une vue schématique en perspective d'un camion semi-remorque équipé du dispositif de l'invention.
La Fig. 2 est une vue schématique en plan d'un détail du châssis de la semi-remorque de la Fig. 1.

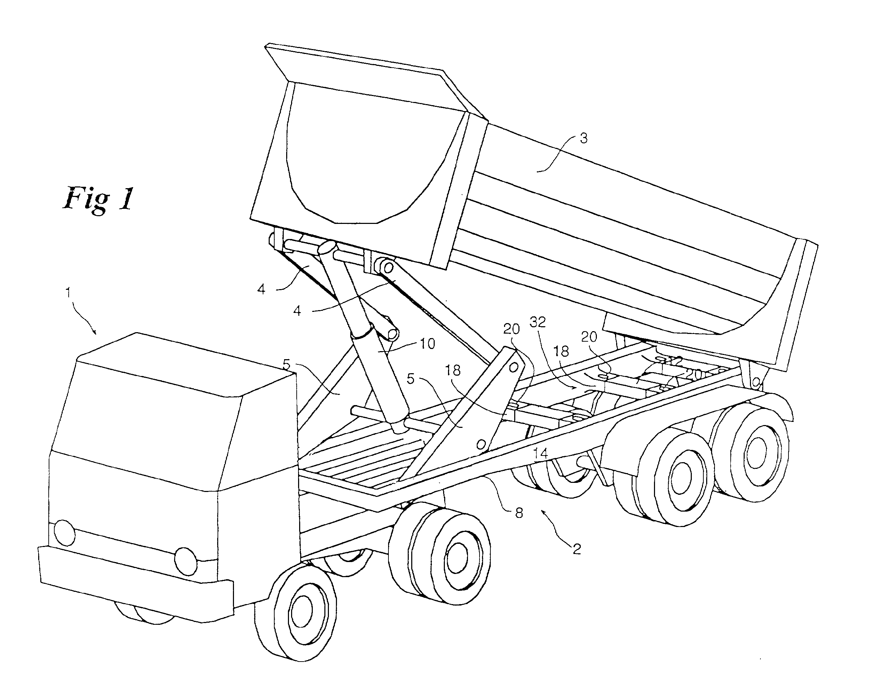

Le tracteur classique 1 montré à la Fig. 1 entraîne une semi-remorque 2 munie d'une benne hémicylindrique 3 classique quant à sa forme générale.

Cependant, la partie avant de la benne 3 est soutenue non pas par un vérin télescopique classique, mais par les jambes 4 d'une structure en compas 6. Les autres jambes 5 du compas 6 sont fixées vers l'avant du châssis 8 de la semi-remorque 2.

Un vérin 10 est monté en intermoteur entre les jambes 4, 5 du compas 6. Lorsque le conducteur du camion doit basculer la benne 3, il injecte un fluide hydraulique dans le vérin 10, provoquant le déploiement du compas 6.

Au repos, le compas 6 est complètement replié et ne fait pas saillie par rapport au châssis de la semi-remorque 2.

L'utilisation d'un compas 6 constitue dans le cas présent une solution a priori absurde pour l'homme du métier. En effet, un compas est une structure extrêmement lourde (de l'ordre d'une tonne), qui augmente considérablement la tare d'un camion et réduit en conséquence les capacités de chargement d'un camion ou d'une remorque qui en seraient équipés. En outre, un compas est encombrant : il est impossible de l'intégrer tant dans un châssis allégé comme décrit dans EP- 0 374 336 que dans un châssis à longerons classique.

Le poids supplémentaire apporté par la présence du compas 6 est compensé notamment par un allègement du châssis, de façon à maintenir la tare à un niveau économiquement raisonnable.

Une façon d'obtenir un châssis allégé est d'en renforcer la rigidité, ce qui permet de réduire de poids des tôles et des profilés utilisés.

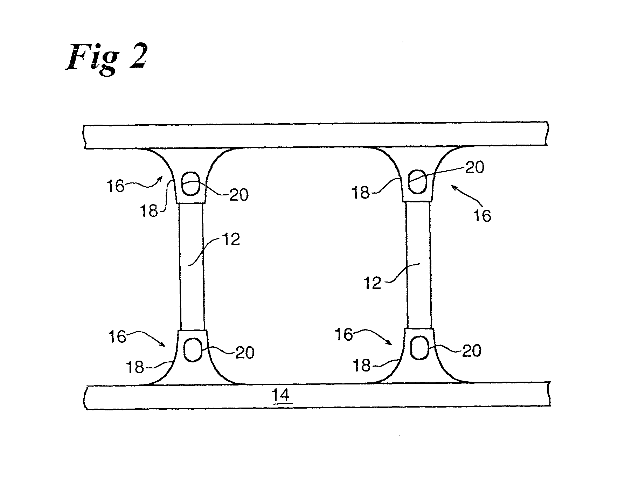

Un tel châssis à rigidité renforcée est représenté succinctement à la Fig. 2. Il comprend deux longerons 14 et des entretoises 12. Selon l'invention, les entretoises 12 sont reliées aux longerons 14 par un raccordement en pattes d'éléphant 16. Une tôle cintrée 18 est placée en congé à chaque angle de raccord entre entretoise 12 et longerons 14, élargissant leur assise mutuelle. En outre, une ouverture 20 ménagée dans chaque tôle cintrée permet la pose d'un cordon de soudure en surface, particulièrement résistant à l'arrachement.

Cette conception permet, à capacité équivalente, d'atteindre globalement une tare inférieure à celle d'une remorque à châssis en berceau, et ce malgré le poids supplémentaire dû au compas 6.

L'espacement entre les longerons 14 du châssis 8 de la benne de l'invention est élargi, ce qui permet une insertion plus aisée du compas 6 et confère également une bien plus grande stabilité à la remorque 2, d'où un moindre danger de renversement.

On notera aussi que le compas 6 exerce au levage une poussée par le bas sur la benne 3, ce qui entraîne paradoxalement moins de problème de déformation que la traction du vérin télescopique classique sur l'avant d'une benne hémicylindrique. Par ailleurs, il est évident que l'on peut opter pour des bennes hémicylindriques de différentes sections transversales sans sortir du cadre de l'invention .

Un avantage de l'invention est que si, contre toute attente, l'équilibre de la benne venait à être perturbé durant le versage, le conducteur peut enclencher un repli quasi-instantané du compas, évitant ainsi le renversement de la remorque 2 ou du camion, ce qui est impossible avec une benne hémicylindrique classique.

Il va de soi que le dispositif de l'invention s'applique aussi bien à des remorques ou à des semi-remorques à benne basculante, comme représenté à la Fig. 1, qu'à des camions à benne.

Le vérin 10 peut-être à simple effet (la benne revenant à l'horizontal de par son propre poids) ou à double effet.

## Revendications

1. Dispositif basculant pour véhicules routiers comprenant un châssis fixe(8), une benne basculante en substance hémicylindrique (3) et un système de levage (6) **caractérisé en ce que** le système de levage (6) est une structure en compas (6) agissant en levier intermoteur , les extrémités libres de ce compas étant solidarisées à pivotement respectivement au châssis (8) et à la benne (3), au moins un vérin (10) étant disposé entre les branches (4,5) de ce compas.

2. Dispositif basculant pour véhicules routiers suivant la revendication 1 **caractérisé en ce que** cet au moins un vérin (10) est à double effet

3. Dispositif basculant pour véhicules routiers suivant l'une quelconque des revendications 1 et 2 **caractérisé en ce que** le châssis fixe (8) est le châssis arrière d'un véhicule automoteur.

4. Dispositif basculant pour véhicules routiers suivant l'une quelconque des revendications 1 à 2 **caractérisé en ce que** le châssis fixe (8) est le châssis d'une remorque ou d'une semi-remorque (2).

5. Dispositif basculant pour véhicules routiers suivant l'une quelconque des revendications précédentes **caractérisé en ce que** la structure en compas (6) est solidarisée à la partie inférieure de la benne hémicylindrique (3).

6. Dispositif basculant pour véhicules routiers suivant l'une quelconque des revendications précédentes **caractérisé en ce que** le châssis fixe (8) est à la fois allégé et renforcé par rapport à un châssis classique.

7. Dispositif basculant pour véhicules routiers suivant la revendication 6 **caractérisé en ce que** le châssis fixe (8) est constitué essentiellement de longerons (14) et de traverses (12) reliés entre eux par des tôles cintrées (18) formant des assemblages en pattes d'éléphant (16).

8. Dispositif basculant pour véhicules routiers suivant la revendication 7 **caractérisé en ce que** les tôles cintrées (18) présentent des découpes (20) permettant la soudure en surface de ces tôles (18) aux traverses (12) et longerons (14).

9. Véhicule routier **caractérisé en ce qu'**il comprend un dispositif basculant suivant l'une quelconque des revendications précédentes.

10. Remorque pour véhicule routier **caractérisée en ce qu'**elle comprend un dispositif basculant suivant l'une quelconque des revendications 1 à 8.
